# EUROPEAN PATENT SPECIFICATION

(11) **EP 3 264 638 B1**
(45) Date of publication and mention of the grant of the patent: **04.12.2024**
(21) Application number: 17172501.3
(22) Date of filing: 23.05.2017
(51) Int. Cl.: H04B 10/2575, H04H 20/69, H04N 7/22

(54) **TV AERIAL PLUG USING OPTICAL FIBERS**
FERNSEHANTENNENSTECKDOSE MIT OPTISCHEN FASERN
PRISE POUR ANTENNES DE TELEVISION UTILISANT DES FIBRES OPTIQUES

(30) Priority: 30.06.2016 IT UA20164807
(43) Date of publication of application: 03.01.2018
(73) Proprietor: Grossystem di Zamparo Stefano, 33079 Sesto al Reghena Pordenone (IT)
(72) Inventor: Zamparo, Stefano, 33097 Sesto al Reghena Pordenone (IT)
(74) Representative: Di Gennaro, Sergio

(56) References cited:
- DE-A1- 4 334 440
- NL-A- 9 101 040
- SE-A1- 0 901 377
- SE-C2- 534 823
- US-A1- 2005 188 405

## Description

The invention relates to a TV aerial plug to be applied to the wall for distributing to the users video and audio signals for terrestrial television and for satellite television, by means of the use of optical fibers.

US2005/188405 : discloses a system for and a method of providing an integrated communications and broadcasting service. This system includes a transmitter and a receiver. The transmitter RF-multiplexes a CATV broadcasting signal and a satellite broadcasting signal, converts the RF-multiplexed broadcasting signal into an RF-multiplexed broadcasting optical signal having a predetermined wavelength, multiplexes the broadcasting optical signal with an Internet data signal, and transmits an integrated communications and broadcasting optical signal via a predetermined optical fiber. The receiver receives the integrated communications and broadcasting optical signal from the transmitter, demultiplexes the received signal according to a wavelength band to separate the received signal into the broadcasting optical signal and the Internet data signal, separates the broadcasting optical signal into the CATV broadcasting signal and the satellite broadcasting signal using the difference between wavelength bands of the CATV broadcasting signal and the satellite broadcasting signal, and transports the separated signals to appropriate terminals.

DE4334440 : the television and/or radio signals are transmitted from a receiving system to one or more television and/or radio sets, the TV signals are first converted to a lower frequency and then conducted to the television and/or radio sets via cables. However, the transmission lines used for this purpose exhibit an increasing attenuation with increased frequency so that the frequency range which can be transmitted via the cables is limited and not all the programs on offer can be simultaneously transmitted via cables. To provide a remedy in this case, all signals received as common-frequency frequency bands are first converted into serial frequency bands of low frequency advantageously linked together and are combined to form one wide frequency band. Following this, the frequency band is supplied to an electro-optical transducer and the optical signals are conducted to the individual subscribers, where they are converted via an opto-electric transducer back into electric signals which are either converted by means of a receiver or are supplied directly to the television or radio sets.

NL9101040 : Optical transmission system for the local network which, in addition to the distribution and exchange of telephony and conventional 'coax-compatible ' signals (45-850 MHz), is furthermore used for the distribution of satellite signals (0.9-2 GHz). These signals are fed via this network to the subscribers where they are converted by a conventional ' satellite tuner ' into signals which are suitable for the TV set. The advantage is an additional service in which the subscribers are connected via the local optical network to centrally located satellite reception antennas of the highest quality.

SE0901377 : The invention concerns a converter (1) for a satellite reception system comprising:- an electrical signal port, - an optical signal port wherein the converter (1) is adapted to convert an optical satellite communications signal, received from the optical signal port, to an electrical satellite communications signal and. to transmit the electrical satellite communications signal via the electrical signal port. The converter (1) is distinguished by that it is adapted to convert also an electrical satellite receiver (4) control signal, received from the electrical signal port, to an optical satellite receiver (4) control signal and transmit said optical satellite receiver (4) control signal via the optical signal port. The invention also concerns a further converter (11), a satellite reception system and a use of a converter (1,11).

The object of the present invention is to realize a TV aerial plug to be applied to the wall, for distributing to the users video and audio signals for terrestrial and for satellite television by means of the use of optical fibers, which is made in a manner different than those disclosed by the prior art represented by the above references.

This TV aerial plug is made with the substantially described characteristics, by way of not-limiting example only, from the following description and with reference to the accompanying drawings, wherein :

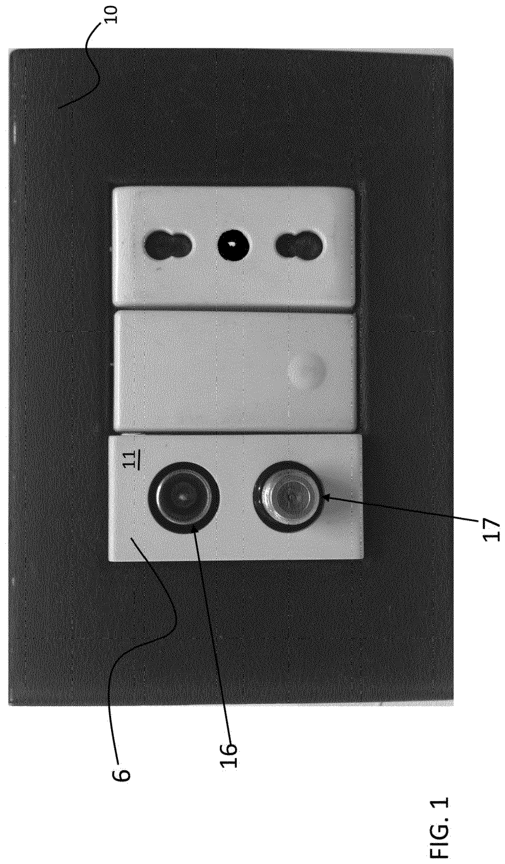

- Fig. 1 shows a front view of the TV aerial plug according to the present invention, at a state mounted into position, as well as connected with its input to at least an optical fiber transmitting optical pulses convertible into correspondent video and audio signals for terrestrial television (TV) and satellite television (SAT), the TV aerial plug being arranged for receiving such signals and for transmitting them with its outputs to the television appliances ;

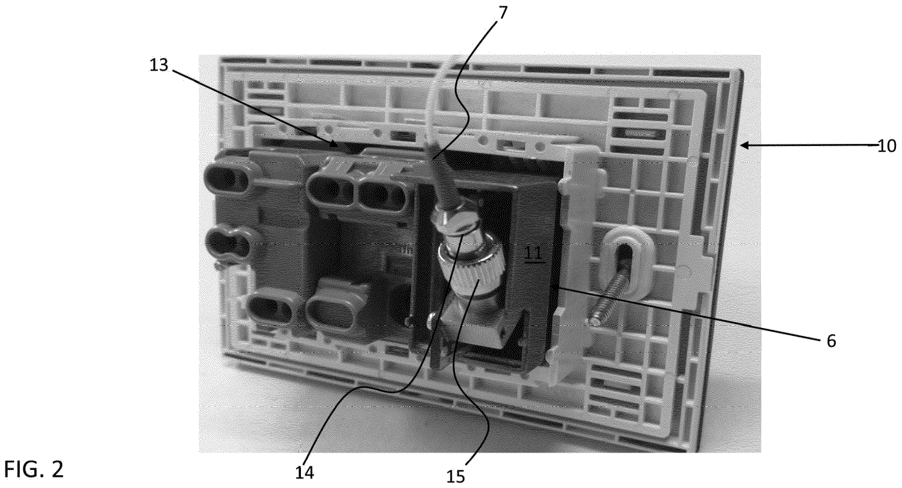

- Fig. 2 shows a rear view of the TV aerial plug of Fig. 1 in an assembled state, and with the optical connector connected to the optical fibers, and in the interior of which an electronic card is included, comprising the electronic components for receiving the optical pulses transmitted through the optical fibers and for converting these optical pulses into corresponding video and audio signals TV and SAT to be transmitted to the television appliances through a TV connector and a SAT connector of traditional type ;

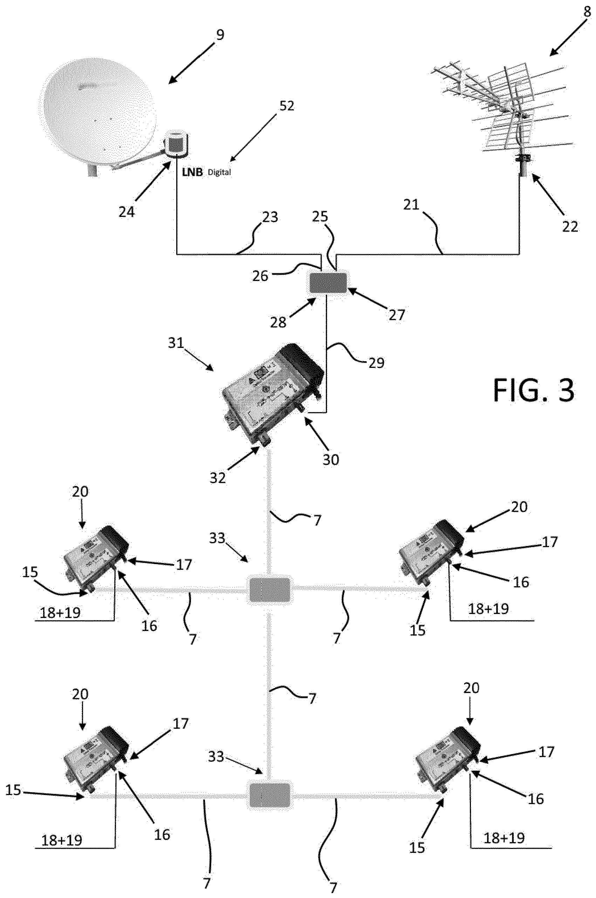

- Fig. 3 shows a set of TV aerial plugs of Figs. 1 and 2, connected respectively to a receiving antenna of TV signals and a receiving antenna of SAT signals, through a set of electronic components for converting the TV and SAT signals into optical pulses, by mixing them to each other, and for transmitting such optical pulses through the optical fibers and for converting the same pulses into correspondent TV and SAT signals which are received by the TV aerial plugs and transmitted to the television appliances ;

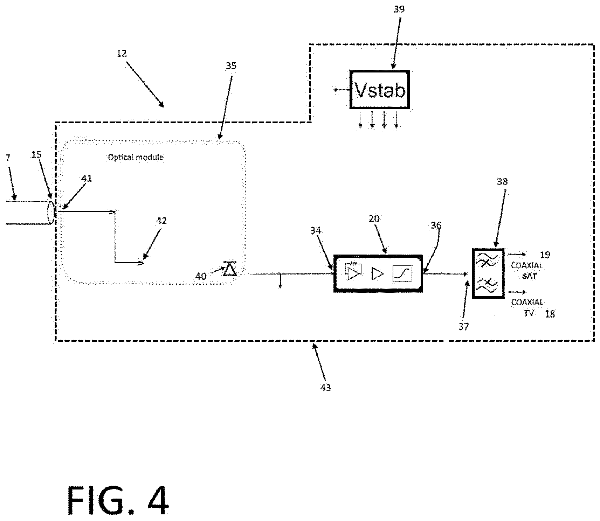

- Fig. 4 shows the block diagram of the electronic components included into the electronic card mounted in the plug of Fig. 2, and connected to both the optical fibers and the TV and SAT connectors of the same plug, and arranged for the unidirectional transmission of the received TV and SAT video signals to the television appliances ;

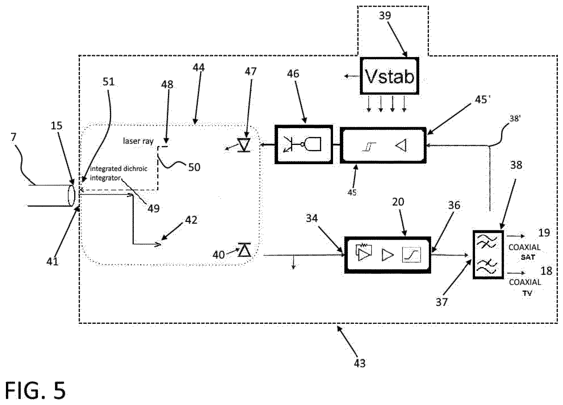

- Fig. 5 shows the block diagram of the electronic components included into the electronic card mounted in the plug and Fig. 2, and connected to both the optical fibers and the TV and SAT connectors of the same plug, and arranged for the bidirectional transmission of the received TV and SAT video signals (such a configuration of electronic components is not part of the invention).

The present invention relates to a TV aerial plug 6 to be applied to the wall for the distribution to the users of video and audio signals for terrestrial television and satellite television, by means of use of optical fibers 7. Moreover, such TV aerial plug 6 is adapted to be connected to optical fibers 7 of the single-mode type for telecommunications, suitable to transmit optical pulses generated as it will be described later on by at least an antenna 8 for receiving video and audio signals (TV) for terrestrial television and by at least an antenna 9 for receiving audio and video signals (SAT) for satellite television, which antennas 8 and 9 are connected to the optical fibers 7 with the components which will be described, and the TV aerial plug 6 is also arranged the unidirectional transmission of the TV and SAT signals to the television appliances and to other users for receiving such signals.

In the Fig. 1 a TV aerial plug 6 according to the invention is shown, which is supported by and adaptable into a flat plate 10 to be applied to the wall and that in this Figure is illustrated in a closed position mounted in position into the flat plate 10, such TV aerial plug 6 being shaped with a metallic box-like body 11 or with other suitable geometric shape, depending on the types thereof which are used in the different countries, containing at least an electronic card 12 (see Fig. 4), the composition and function of which will be described soon, said plug being insertable removably into a correspondent through opening 13 of the plate 10 (fig. 2). Of course, the box-like body 11 of the plug 6 may adapt itself also into other modular structures of the electric plant design for antennas, such as for example some little frames or frameworks for wall plate for users of per se known type, and available by all the suppliers of these plants. The TV aerial plug referred to is prearranged for being connected with its rear input 14 to a connector 15 of optical fibers 7, through which there are transmitted the optical pulses corresponding to the video and audio signals for terrestrial television TV and the video and audio signals for satellite television SAT, which optical pulses are generated as it will be described, starting from the TV video and audio signals received by the TV antenna 8 and the SAT video and audio signals received by the SAT antenna 9.

In the interior of such TV aerial plug 6 at least an electronic card 12 is contained, which is illustrated with reference to the Figs. 4 and 5, with the electronic components thereof, and such plug 6 is also connected with its outputs to a TV connector 16 for video and audio signals for terrestrial television and to a SAT connector 17 for video and audio signals for satellite television, which connectors are assembled into the plug 6 spaced away and parallel to each other and have the same length, and are accessible from the fore part of the same plug, in such a way that these connectors 16 and 17 may be then connected through correspondent antenna cables 18 and 19 of the traditional type with one or more television apparatuses.

By referring now to the Fig. 3, a set of antenna plugs of the above described type is shown, which are connected respectively with an antenna for receiving TV signals 8, and an antenna for receiving SAT signals 9, which are installed into the buildings on a high position, on the roof or the external walls of the same buildings, and these antenna plugs are connected with their input connectors 15 with correspondent optical fibers 7, in turn connected to the receiving antennas of TV signals 8 and satellite signals SAT 9 through the set of electronic components which will be described soon.

In particular, in the example represented in the Fig. 3, each antenna plug isn't illustrated in detail as described in the Figs. 1 and 2, but appears to be connected with its input connectors 15 of the optical fibers 7 also with the inputs (not indicated) of relative optical receivers 20 of the traditional type, that as it will be described hereinafter form a part of the electronic components included into the electronic card 12 of each antenna plug 6 and perform the function which will be described soon. Moreover, in the Fig. 3 it is noted that each antenna plug is prearranged for being connected with its relative output connectors TV 16 and SAT 17, through a correspondent antenna cable 18 and 19, with one or more television appliances (not illustrated).

The circuit illustrated by the Fig. 3 comprises also the following components :
an electric coaxial cable 21 connected with the output 22 of the receiving antenna TV 8 of the terrestrial television and another electric coaxial cable 23 conn0ected to the output 24 of the receiving antenna 9 of the satellite television, and such electric coaxial cables 21 and 23, which are provided for transmitting from the relative antennas 8 and 9 the correspondent video and audio signals for terrestrial television and for satellite television, of different types, are both connected to a relative input 25 and 26 of at least a mixer of signals 27 of traditional type, in which the TV and SAT signals are mixed to each other in a per se known manner.

The mixer of signals 27 is provided with at least an output 28, which is connected through an electric coaxial cable 29 to the input 30 of at least an optical transmitter 31 of traditional type, which is provided with an output connector 32 connected to at least an optical fiber 7 of the circuit. The optical transmitter 31 is arranged for receiving from the mixer 27 the TV and SAT video and audio signals mixed to each other in the same mixer, and for converting such signals into correspondent optical pulses, which are transmitted by such optical transmitter 31 to the optical fibers 7, for transmitting these optical pulses through all the optical fibers 7 toward the different antenna plugs 6 connected in the circuit, into which all the transmitted optical pulses are converted in the correspondent TV and SAT signals by the different optical receivers 20 included in the relative electronic cards 12 of the different antenna plugs 6, together with other electronic components which will be described. In the example of circuit of the Fig. 3, there are provided four antenna plugs 6 separated from each other, connected to the same number of optical receivers 20, and installed in different positions in the relative inhabited building, and the antenna plugs 6 of each pair of antenna plugs 6 are connected to each other, through a relative optical fiber 7, with an optical coupler splitter 33 of traditional type, namely a device with logic function to distribute the power of a signal among the different connections in the input and the output of the same optical coupler splitter. The two optical coupler splitters 33 provided in the circuit referred to are connected to each other by an optical fiber 7 and one of such optical coupler splitter 33, which in the Fig.3 is the upper one, is connected to the optical transmitter 31 with another optical fiber 7, as already explained previously. In the Fig. 4 there are now described the electronic components included in the electronic card 12 of an antenna plug 6 according to the present invention, and provided for the unidirectional transmission of the received TV and SAT signals toward the relative television appliances connected to such antenna plug, as previously described.

The electronic components of the electronic card 12 are substantially constituted by at least an optical receiver 20 identical to those ones just described and connected with its input 34 to the input connector 15 of the relative optical fiber 7 through an optical module 35 formed and operating as it will be described soon, and the output 36 of such optical receiver 20 is connected to the input 37 of a TV-SAT de-mixer filter 38, the function of which will be described soon.

Besides, the electronic card 12 is connected to at least a voltage stabilizer 39 of the traditional type. The optical module 35 is formed preferably by a PIN photodiode 40 with reduced surface, the input 41 of which is connected to the input connector 15 of the optical fiber 7 and the output 42 of which is connected to the input 34 of the optical receiver 20, and the scope of such PIN photodiode 40 is to ensure an unidirectional transmission of the optical pulses coming from the optical fiber 7 toward the optical receiver 20 and the subsequent TV-SAT de-mixer filter 38.

In this way, the optical pulses transmitted through the optical fiber 7 and the optical module 35 arrive in the optical receiver 20, which provides for receiving such pulses and converting them into correspondent TV and SAT signals mixed to each other, as already explained previously, and these TV and SAT signals are transmitted through the output 36 of the optical receiver 20 to the input 37 of the de-mixer filter 38, which is arranged for separating the TV signals from the SAT signals, and for applying these separated signals respectively to the TV connector 16 and the SAT connector 17 (both not illustrated), from which such signals are transmitted to the correspondent television appliances through the relative antenna cables 18 and 19. In the Figure 3, all the just described electronic components of the electronic card 12 are schematically illustrated as included in an electronic block 43.

## Claims

1. TV aerial plug (6) to be applied to the wall for distributing to the users of video and audio signals for terrestrial television (TV) and satellite television (SAT), wherein the signals for terrestrial television (TV) are received by a TV receiving antenna (8) and the signals for satellite television (SAT) are received by a SAT receiving antenna (9), the signals (TV) and the signals (SAT) being mixed to each other in a signal mixer (27) connected to an optical transmitter (31) of traditional type, for converting the TV and SAT signals into correspondent optical pulses which are transmitted to optical fibers (7) of the single-mode type for telecommunications which are connected to optical receivers (20) of traditional type, the TV aerial plug (6) being **characterized** for being supported by and adapted into a flat plate (10) to be applied to the wall, the TV aerial plug (6) containing at least an electronic card (12) comprising at least an optical module (35) for the unidirectional transmission of the optical pulses, and comprising at least an optical receiver (20) and a de-mixer filter (38), and at least a voltage stabilizer (39) of the traditional type, the plug (6) being also arranged for being connected with its rear inlet (14) to a connector (15) of optical fibers (7), and the plug (6) being also connected with its outlets to a TV connector (16) for video and audio signals for terrestrial TV and with a SAT connector (17) for video and audio signals for satellite television, which connectors (16, 17) are accessible from the front part of the same plug, for being able to be connected through correspondent antenna cables (18 and 19) to one or more television appliances, the optical receiver (20) being adapted to convert the optical pulses into the correspondent TV and SAT signals, the optical receiver (20) being connected with its outlet (36) to said de-mixed filter (38) and with its inlet (34) to the output of the optical module (35);
that said optical module (35) is formed by a PIN photodiode (40), the input (41) of which is connected to said connector (15) of optical fibers (7) and the output (42) of which is connected to the input (34) of said optical receiver (20), for ensuring an unidirectional transmission of the optical pulses coming from said optical fibers (7) toward said optical receiver (20) and the subsequent
TV-SAT de-mixer (38).

## Patentansprüche

1. An der Wand anzubringende Fernsehantennesteckdose (6) zur Verteilung von Video- und Audiosignalen für terrestrisches Fernsehen (TV) und Satellitenfernsehen (SAT) an die Benutzer, wobei die Signale für terrestrisches Fernsehen (TV) von einer TV-Empfangsantenne (8) empfangen werden und die Signale für Satellitenfernsehen (SAT) von einer SAT-Empfangsantenne (9) empfangen werden, wobei die Signale (TV) und die Signale (SAT) in einem Signalmischer (27), der mit einem optischen Sender (31) vom herkömmlichen Typ verbunden ist, miteinander gemischt werden, um die TV- und SAT-Signale in entsprechende optische Impulse umzuwandeln, die zu optischen Fasern (7) vom Einmoden-Typ für die Telekommunikation übertragen werden, die mit optischen Empfängern (20) vom herkömmlichen Typ verbunden sind, wobei die Fernsehantennesteckdose (6) **dadurch gekennzeichnet ist, dass** sie von einer flachen Platte (10) getragen und in diese eingepasst wird, die an der Wand angebracht werden soll, wobei die Fernsehantennesteckdose (6) mindestens eine elektronische Karte (12) enthält, die mindestens ein optisches Modul (35) für die unidirektionale Übertragung der optischen Impulse umfasst und mindestens einen optischen Empfänger (20) und ein Entmischungsfilter (38) sowie mindestens einen Spannungsstabilisator (39) vom herkömmlichen Typ umfasst, wobei die Steckdose (6) auch so angeordnet ist, dass sie mit ihrem hinteren Eingang (14) mit einem Stecker (15) für optische Fasern (7) verbunden ist, und die Steckdose (6) auch mit ihren Ausgängen mit einem TV-Stecker (16) für Video- und Audiosignale für terrestrisches Fernsehen und mit einem SAT-Stecker (17) für Video- und Audiosignale für Satellitenfernsehen verbunden ist, wobei die Stecker (16, 17) vom vorderen Teil derselben Steckdose aus zugänglich sind, um durch entsprechende Antennenkabel (18 und 19) mit einem oder mehreren Fernsehgeräten verbunden werden zu können, wobei der optische Empfänger (20) angepasst ist, um die optischen Impulse in die entsprechenden TV- und SAT-Signale umzuwandeln, wobei der optische Empfänger (20) mit seinem Ausgang (36) mit dem entmischten Filter (38) und mit seinem Eingang (34) mit dem Ausgang des optischen Moduls (35) verbunden ist;
dadurch, dass das optische Modul (35) aus einer PIN-Fotodiode (40) besteht, deren Eingang (41) mit dem Stecker (15) für optische Fasern (7) und deren Ausgang (42) mit dem Eingang (34) des optischen Empfängers (20) verbunden ist, um eine unidirektionale Übertragung der von den optischen Fasern (7) kommenden optischen Impulse zum optischen Empfänger (20) und dem nachfolgenden TV-SAT-Demixer (38) zu gewährleisten.

## Revendications

1. Prise pour antennes de télévision (6) à appliquer au mur pour distribuer aux utilisateurs des signaux vidéo et audio pour la télévision terrestre (TV) et la télévision par satellite (SAT), les signaux pour la télévision terrestre (TV) étant reçus par une antenne de réception TV (8) et les signaux pour la télévision par satellite (SAT) étant reçus par une antenne de réception SAT (9), les signaux (TV) et les signaux (SAT) étant mélangés les uns aux autres dans un mélangeur de signaux (27) connecté à un transmetteur optique (31) de type traditionnel, pour convertir les signaux TV et SAT en impulsions optiques correspondantes qui sont transmises à des fibres optiques (7) du type monomode pour les télécommunications qui sont connectées à des récepteurs optiques (20) de type traditionnel, la prise pour antennes de télévision (6) étant **caractérisée** pour être supportée par et adaptée dans une plaque plate (10) à appliquer au mur, la prise pour antennes de télévision (6) contenant au moins une carte électronique (12) comprenant au moins un module optique (35) pour la transmission unidirectionnelle des impulsions optiques, et comprenant au moins un récepteur optique (20) et un filtre dé-mélangeur (38), et au moins un stabilisateur de tension (39) de type traditionnel, la prise (6) étant également agencée pour être reliée par son entrée arrière (14) à un connecteur (15) de fibres optiques (7), et la prise (6) étant également reliée par ses sorties à un connecteur TV (16) pour les signaux vidéo et audio pour la télévision terrestre et à un connecteur SAT (17) pour les signaux vidéo et audio pour la télévision par satellite, lequels connecteurs (16, 17) sont accessibles depuis la partie avant de la même prise, pour pouvoir être connectés par des câbles d'antenne correspondants (18 et 19) à un ou plusieurs appareils de télévision, le récepteur optique (20) étant adapté pour convertir les impulsions optiques en signaux TV et SAT correspondants, le récepteur optique (20) étant connecté par sa sortie (36) audit filtre dé-mélangé (38) et par son entrée (34) à la sortie du module optique (35);
en ce que ledit module optique (35) est formé d'une photodiode PIN (40) dont l'entrée (41) est connectée audit connecteur (15) de fibres optiques (7) et dont la sortie (42) est connectée à l'entrée (34) dudit récepteur optique (20) pour assurer une transmission unidirectionnelle des impulsions optiques provenant desdites fibres optiques (7) vers ledit récepteur optique (20) et le dé-mélangeur TV-SAT (38) qui s'ensuit.
